# EUROPEAN PATENT APPLICATION

(11) **EP 3 323 297 A1**
(43) Date of publication of application: **23.05.2018**
(21) Application number: 16824592.6
(22) Date of filing: 23.05.2016
(51) Int. Cl.: A23L 3/015, A23L 3/02, A23L 3/10, A23L 3/34, A23L 23/00

(54) **STERILIZATION METHOD OF SEASONING SAUCE**

(30) Priority: 13.07.2015 KR 20150099234
(71) Applicant: Cj Cheiljedang Corporation, Seoul 04560 (KR)
(72) Inventor: CHO, Won Il, Seoul 08018 (KR); MOON, Sang Young, Seoul 04164 (KR); CHOI, Su Hee, Suwon-si Gyeonggi-do 16507 (KR); CHOI, Yoon Jung, Suwon-si Gyeonggi-do 16509 (KR)
(74) Representative: Nony
(86) International application number: PCT/KR2016/005425
(87) International publication number: WO 2017/010675

(57) **Abstract**

Provided herein is a method of sterilizing a seasoning sauce which includes performing sterilization at an ultra-high pressure. The method of sterilizing a seasoning sauce according to an embodiment has a more excellent sterilization effect on a seasoning sauce than that of an existing heat sterilization method and enhances taste and flavor of the seasoning sauce.

## Description

### [Technical Field]

The present invention relates to a method of sterilizing a seasoning sauce which includes performing sterilization at an ultra-high pressure.

### [Background Art]

The Korean representative food, Bulgogi, is a menu leading the globalization of Korean foods, and sales of a variety of processed foods using Bulgogi are expanded to various global markets including U.S.A., Europe, China, Japan, and the like. However, in a seasoning sauce which is a key ingredient of Bulgogi base processed foods, a large number of spore-forming *Bacillus* microorganisms with high heat resistance is remained in various spicy vegetables such as garlic, ginger, onions, and the like and soy sauce, which are used as main ingredients. Thus, to store such a seasoning sauce at room temperature, it is inevitable to apply a heat sterilization process thereto, and damage to quality thereof by heat occurs. Therefore, it may be most important to develop and apply an optimum sterilization method capable of securing high quality in the globalization of Korean Bulgogi base processed foods such as Bulgogi seasoning sauces, and the like.

Currently, methods of sterilizing a commercially applicable seasoning sauce and a paste-type sauce similar thereto are mostly a heat sterilization method which is performed by heating such a sauce in a preparation tank with a stationary double steam jacket at a temperature of 85°C to 90°C for 30 minutes to 45 minutes and hot-filling the sauce, or is performed using a tube heat exchange type continuous heat sterilizer. When such a heat sterilization method is used, most microbial vegetative cells are killed, but quality degradation is caused by heating due to characteristics of spicy vegetables with low heat resistance, and, in the case of heat-resistant spore-forming bacteria, it is difficult to effectively reduce the number of the bacteria, and thus products distributed at room temperature may have a potential safety risk.

In addition to the heat sterilization method, there are methods of adding a variety of natural antimicrobial agents such as alcohols, organic acids, surfactants, bacteriocins, calcium preparations, and the like, but these methods have a relatively low effect of controlling microorganisms, and cause the degradation of sensory qualities such as taste, flavor, color, and the like, and thus there are many limitations in use thereof.

Therefore, when existing processing and sterilization processes are used, it is difficult to extend the shelf life of a product by effectively controlling heat-resistant microorganisms growing in spicy vegetables and seasoning ingredients, and thus there is a need to develop a novel sterilization method capable of effectively controlling heat-resistant spore-forming microorganisms as well as fungi.

### [Disclosure]

### [Technical Problem]

An aspect of the present invention provides a method of sterilizing a seasoning sauce, including: dipping a spicy vegetable in a solution including an antimicrobial agent; blanching the spicy vegetable dipped in the solution including an antimicrobial agent; preparing a seasoning sauce by mixing the blanched spicy vegetable with a seasoning ingredient and a thickener; and packaging the seasoning sauce and sterilizing the resulting sauce at an ultra-high pressure.

### [Technical Solution]

An embodiment of the present invention provides a method of sterilizing a seasoning sauce, including:
dipping a spicy vegetable in a solution including an antimicrobial agent (operation S101);
blanching the spicy vegetable dipped in the solution including the antimicrobial agent (operation S102);
preparing a seasoning sauce by mixing the blanched spicy vegetable with a seasoning ingredient and a thickener (operation S103); and
packaging the seasoning sauce and sterilizing the resulting sauce at an ultra-high pressure (operation S104).

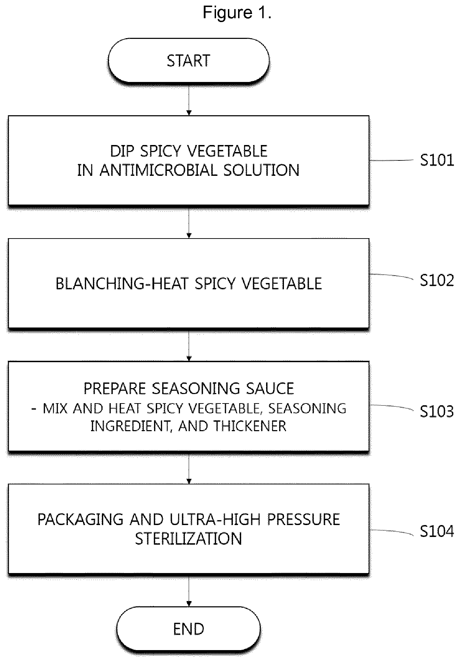

Hereinafter, each process of the method of sterilizing a seasoning sauce of the present invention will be described in detail with reference to the flowchart of FIG. 1.

In the method of sterilizing a seasoning sauce, according to an embodiment of the present invention, first, a process of dipping a spicy vegetable in a solution including an antimicrobial agent (operation S101) is performed.

According to one embodiment, the spicy vegetable refers to vegetables added to add taste and flavor to the seasoning sauce, and may be, for example, at least one vegetable selected from the group consisting of garlic, ginger, chili pepper, black pepper, onions, and spring onions, but the present invention is not limited thereto. The spicy vegetable may be sufficiently washed with water before the dipping process to remove a contaminant present on a surface of the vegetable.

According to one embodiment, the antimicrobial agent may be selected from the group consisting of sodium hypochlorite, hypochlorous acid, chlorine dioxide, ozone, hydrogen peroxide, organic acids, bacteriocins, polylysine, and vitamin B1 lauryl sulfate, but the present invention is not limited thereto. The organic acids may be any organic acid capable of exhibiting a sterilization effect by inhibiting the growth of microorganisms, for example, lactic acid, acetic acid, citric acid, or succinic acid, but the present invention is not limited thereto. In addition, the bacteriocin used as an antimicrobial agent may be, for example, nisin or a nisin-containing fermentation extract. Meanwhile, the type and amount of the antimicrobial agent may be appropriately adjusted by collectively considering an expected sterilization effect for the seasoning sauce and effects thereof on sensory qualities such as taste, flavor, color, texture, and the like.

According to one embodiment, the antimicrobial agent may be dissolved in water, and a solution including the antimicrobial agent may include 0.01% (w/w) to 3% (w/w) of an antimicrobial agent with respect to a weight of water.

Meanwhile, when the spicy vegetable is dipped in a solution including the antimicrobial agent, the solution may be used in an amount sufficient to exhibit a sterilization effect, and dipping time may range from about 30 minutes to about 2 hours.

Next, a process of blanching the spicy vegetable dipped in the solution including the antimicrobial agent (operation S102) is performed.

According to one embodiment, the blanching process (hereinafter, used as the same meaning as "blanching heating") may be performed by blanching the spicy vegetable dipped in the solution including the antimicrobial agent in water at a temperature ranging from 80°C to 100°C. Most preferably, the spicy vegetable may be blanched in water at a temperature ranging from 90°C to 95°C. In addition, the method may further include, before the blanching process, sufficiently washing the spicy vegetable to remove the residual antimicrobial agent after the dipping process (operation S101).

Meanwhile, the blanching process may be performed in water at a temperature within the above range for 20 seconds to 50 seconds, most preferably, for 30 seconds to 40 seconds.

Subsequently, a process of preparing a seasoning sauce by mixing the blanched spicy vegetable with a seasoning ingredient and a thickener (operation S103) is performed.

According to one embodiment, the seasoning ingredient may be a mixture of appropriate seasoning ingredients according to a desired seasoning sauce to be prepared, for example, at least one seasoning ingredient selected from the group consisting of sugar, salt, soy sauce, hot pepper paste, soybean paste, vinegar, chili powder, kelp, shrimp, anchovies, and shiitake mushrooms, but the present invention is not limited thereto.

Meanwhile, the thickener used in the present process is a food additive for improving tactility of a food by increasing the viscosity thereof and improving and maintaining taste and quality of the food, by inhibiting moisture from being separated from the food, and may be, for example, propylene glycol alginate, potassium carboxymethylcellulose, modified starch, ammonium alginate, glucosamine, guar gum, pectin, or the like.

The seasoning sauce may be prepared in a desired flavor and shape by mixing the spicy vegetable, the seasoning ingredient, and the thickener and cooking the resulting mixture according to a method known in the art (e.g., heating or the like).

Lastly, a process of packaging the seasoning sauce and sterilizing the resulting sauce at an ultra-high pressure (operation S104) is performed.

According to one embodiment, the packaging process may be performed using an appropriate packing material resistant to ultra-high pressure, and the packing material may be selected according to the type of seasoning sauce to be produced and consumer preference. For example, the packing material may be selected from the group consisting of a pouch, a plastic container, a glass bottle, a tube, and a can, but the present invention is not limited thereto.

According to one embodiment, in the sterilization method according to the present invention, after packaging the prepared seasoning sauce, finally, a pressure of 200 MPa to 900 MPa may be applied thereto. Preferably, a pressure of 500 MPa to 900 MPa may be applied. Time taken to apply the pressure may range from 3 minutes to 60 minutes.

According to one embodiment, a temperature at which the pressure is applied may range from 20°C to 100°C. That is, in the ultra-high pressure state, heating is not performed or performed, thereby improving sensory qualities of the seasoning sauce such as taste, texture, color, and the like, and exhibiting a sterilization effect and an effect of inactivating harmful enzymes.

### [Advantageous Effects]

A method of sterilizing a seasoning sauce, according to one embodiment is advantageous in that this method has a more excellent sterilization effect on a seasoning sauce than that of an existing heat sterilization method, and enhances taste and flavor.

### [Brief description of the drawings]

FIG. 1 is a flowchart illustrating processes of a seasoning sauce sterilization method according to an embodiment.

### [Best mode]

An embodiment of the present invention provides a method of sterilizing a seasoning sauce, including:
dipping a spicy vegetable in a solution including an antimicrobial agent;
blanching the spicy vegetable dipped in the solution including the antimicrobial agent;
preparing a seasoning sauce by mixing the blanched spicy vegetable with a seasoning ingredient and a thickener; and
packaging the seasoning sauce and sterilizing the resulting sauce at an ultra-high pressure.

According to one embodiment of the present invention, the spicy vegetable may be at least one vegetable selected from the group consisting of garlic, ginger, chili pepper, black pepper, onions, and spring onions, but the present invention is not limited thereto.

According to one embodiment, the antimicrobial agent may be selected from the group consisting of sodium hypochlorite, hypochlorous acid, chlorine dioxide, ozone, hydrogen peroxide, organic acids, bacteriocins, polylysine, and vitamin B1 lauryl sulfate, but the present invention is not limited thereto.

According to one embodiment, the antimicrobial agent may be dissolved in water, and a solution including the antimicrobial agent may include 0.01% (w/w) to 3% (w/w) of an antimicrobial agent with respect to a weight of water.

According to one embodiment, the blanching process may be performed by blanching the spicy vegetable dipped in the solution including the antimicrobial agent in water at a temperature ranging from 80°C to 100°C.

According to one embodiment, the seasoning ingredient may be at least one seasoning ingredient selected from the group consisting of sugar, salt, soy sauce, hot pepper paste, soybean paste, vinegar, chili powder, kelp, shrimp, anchovies, and shiitake mushrooms.

According to one embodiment, the sterilizing process may be performed by applying a pressure of 200 MPa to 900 MPa, preferably, a pressure of 500 MPa to 900 MPa.

According to one embodiment, the sterilizing process may be performed at a temperature of 20°C to 100°C.

According to one embodiment, the packaging process may be performed using a packing material selected from the group consisting of a pouch, a plastic container, a glass bottle, a tube, and a can.

### [Mode]

Hereinafter, one or more embodiments will be described in further detail with reference to examples. However, these examples are provided only for the purpose of explaining the one or more embodiments and are not intended to limit the scope of the present invention.

### Example 1: Seasoning Sauce Preparation Method

A sterilized seasoning sauce was prepared using a sterilization method according to an embodiment of the present invention, and a flowchart therefor is illustrated in FIG. 1. Garlic and ginger were used as spicy vegetables.

### Example 1-1: Washing, Dehydration, and Selection of Spicy Vegetables

To remove a contaminant such as dust, a foreign substance, or the like attached to a surface of the garlic and the ginger, the garlic and the ginger were washed three times with clean water, and then was dehydrated using a dehydrator while being rotated at 700 rpm for 1 minute. After dehydration, damaged garlic and ginger, or garlic and ginger damaged by blight and harmful insects were selected and removed.

### Example 1-2: Sterilization through Dipping in Antimicrobial Solution and Blanching Heating

The washed and selected garlic and ginger were dipped in a 100 ppm hypochlorous acid solution at room temperature for 1 hour (hereinafter, referred to as "antimicrobial solution dipping method"), washed with clean water, and then subjected to blanching heating in water at 95°C for 30 seconds (hereinafter, referred to as "blanching heating method").

### Example 1-3: Mixing, Cooking and Heating of Seasoning Ingredients

The garlic and ginger having undergone the pre-treatment sterilization process of Example 1-2 above were sliced, mixed with seasoning ingredients such as sugar, soy sauce, seasoning, and the like and a thickener, and then heated at 85°C for about 20 minutes, thereby completing the preparation of a seasoning sauce.

### Example 1-4: Packaging and High Pressure Sterilization

The seasoning sauce prepared through the processes of Examples 1-1 to 1-3 was packaged in transparent heat-resistant pouches in an amount of 200 g/unit, and then processed at a temperature of 25°C to 100°C and a pressure of 500 MPa for 3 minutes to 10 minutes, thereby completing the manufacture of a processed food that can be distributed in a refrigerated state or at room temperature.

### Example 2: Measurement of Sterilization Effect of Pre-treatment Sterilization Process on Microorganisms

Pre-treatment and sterilization treatment of garlic and ginger were performed using a constant-temperature circulating water bath, and sterilization effects on total bacteria, heat-resistant Bacillus bacteria, and fungi such as yeast and mold were investigated.

### Example 2-1: Measurement of Sterilization Effects of Various Sterilization Processes on Bacteria and Fungi

Sterilization effects of various sterilization methods on garlic and ginger samples were investigated. As a result of experimentation, as shown in Table 1 below, an antimicrobial component of chopped garlic and ginger exhibited a sterilization effect on fungi, but hardly exhibited a sterilization effect on a total bacterial count since heat-resistant *Bacillus* bacteria grew naturally at a population of about 10³ CFU/g. In addition, the antimicrobial solution dipping method was confirmed to exhibit a slight sterilization effect on fungi in whole ginger, but was seen to have no sterilization effect on heat-resistant *Bacillus* bacteria due to almost no change in total bacterial count. In contrast, the blanching heating method performed at 90°C for 40 seconds was confirmed to be the most effective method since both a total bacterial count and a fungi count in garlic and ginger were about 10³ CFU/g.

**<Table 1>**

| Sterilization method | Detailed conditions | Total bacterial count (CFU/g) | | Fungi count (CFU/g) | |
|---|---|---|---|---|---|
| | | Before sterilization | After sterilization | Before sterilization | After sterilization |
| Using antimicrobial activity of garlic and ginger itself | Pulverize peeled garlic and ginger, stored at 4°C for 1 day (Action of antimicrobial | Whole garlic 1.5x10⁶ Whole ginger 3.8x10⁴ | Chopped garlic 4.3x10⁶ Chopped garlic 6.0x10⁴ | Whole garlic 0 Whole ginger 5.0x10² | Chopped garlic 0 Chopped ginger 0 |
| | component in garlic and ginger: allicin) | | | | |
| Antimicrobial solution dipping method | 100 ppm hypochlorous acid, dipped for 1 hour | Whole garlic 2.8x10⁵ Whole ginger 3.4x10⁴ | Whole garlic 5.7x1 0⁵ Whole ginger 5.2x10⁴ | Whole garlic 0 Whole ginger 2.5x10² | Whole garlic 0 Whole ginger 6.0x10¹ |
| Blanching heating method | Heated at 90°C for 40 seconds | Whole garlic 1.1x10 Whole ginger 4.6x10⁶ | Whole garlic 7.0x10 Whole ginger 1.6x10² | Whole garlic 0 Whole ginger 4.6x10² | Whole garlic 0 Whole ginger 0 |

### Example 2-2: Optimization of Pre-treatment Sterilization Process

As shown in Table 2 below, it was seen that both bacteria and fungi were killed in whole garlic when subjected to blanching heating at a temperature of 90°C to 95°C for 30 seconds to 40 seconds, a larger number of heat-resistant *Bacillus* bacteria was naturally grown in whole ginger than in garlic, and about 10² CFU/g of bacteria were remained even after blanching.

**<Table 2>**

| Detailed conditions for each process | | Whole garlic (CFU/g) | | Whole ginger (CFU/g) | |
|---|---|---|---|---|---|
| | | Total bacterial count | Fungi count | Total bacterial count | Fungi count |
| Non-treatment group | | 4.7x10³ | 0 | 2.6x10⁷ | 1.3x10⁴ |
| After peeling and washing | | 1.1x10⁴ | 0 | 4.6x10⁶ | 4.6x10² |
| Blanching conditions | 90°C, 30 sec | 0 | 0 | 2.5x10³ | 0 |
| | 90°C, 40 sec | 7.0x10¹ | 0 | 1.6x10² | 0 |
| | 95°C, 30 sec | 0 | 0 | 1.9x10² | 0 |
| | 95°C, 40 sec | 0 | 0 | 1.2x10² | 0 |

Thus, to enhance a sterilization effect on whole ginger, an antimicrobial solution dipping method was first performed, and then blanching was performed according to the blanching conditions shown in Table 2. As a result, as shown in Table 3 below, it was confirmed that all the four conditions exhibited an effect of reducing total bacterial counts by an average of 10¹ CFU/g. In addition, it was seen that an effect of reducing bacteria by 10² CFU/g on *Bacillus* bacteria with heat resistance was exhibited when compared to the peeled and washed control, from which it was confirmed that, when the two pre-treatment methods are combined, a sterilization effect was enhanced.

**<Table 3>**

| Detailed conditions for each process | Whole ginger (CFU/g) | | |
|---|---|---|---|
| | Total bacterial count | Bacillus | Fungi |
| Peeling and before washing | 1.5x10⁶ | 5.0x10⁴ | 3.0x10⁴ |
| Peeling and after washing | 3.4x10⁴ | 6.0x10³ | 2.5x10² |
| Dipped in hypochlorous acid (100 ppm, 1 hour) | 5.2x10⁴ | 8.5x10³ | 6.0x10¹ |
| Blanching after dipped in hypochlorous acid (90°C to 95°C, 30 sec to 40 sec) | 2.0x10¹ to 3.5x10¹ | 1.0x10¹ to 4.0x10¹ | 0 |

From the above results, it was confirmed that, when garlic and ginger, which are main targets for sterilization since they contain a large number of heat-resistant spore-forming bacteria, among main ingredients of seasoning sauces including a Bulgogi seasoning sauce were first dipped in an antimicrobial solution and then was subjected to blanching heating, the bacteria could be almost sterilized, and it was confirmed that these processes could be used as a pre-treatment sterilization method of the method of sterilizing a seasoning sauce according to an embodiment of the present invention.

### Example 3: Measurement of Sterilization Effect of Seasoning Sauce according to Pre-treatment Sterilization Process and Ultra-high Pressure Sterilization Process

An ultra-high pressure sterilization process was performed by applying pressures of 100 MPa, 300 MPa, and 500 MPa to samples packaged in pouches for 0 minute, 5 minutes, 10 minutes, 15 minutes, and 20 minutes using a laboratory-scale high pressure processor (Hiperbaric). At this time, a temperature was set between 25°C and 100°C according to conditions of experimental groups, and come-up times of 26 seconds to 2 minutes and 30 seconds were taken at 100 MPa to 500 MPa. After sterilization was completed, measurement of bacteria and fungi was performed by culturing the corresponding microorganism in an appropriate medium at 37°C for 48 hours and counting the corresponding microorganism using a colony counting method.

### Example 3-1: Sterilization Effect and Sensory Evaluation of Seasoning Sauce according to Pre-treatment Sterilization Process and Ultra-high Pressure Non-heating Sterilization Process

A seasoning sauce was prepared using garlic and ginger having undergone the pre-treatment sterilization process (antimicrobial solution dipping method and blanching heating method) according to Example 2-2, an ultra-high pressure of 500 MPa was applied to the prepared seasoning sauce at room temperature (25°C) for 3 minutes, and then was stored in a refrigerated state and at room temperature. The results thereof are shown in Table 4 below, from which it was seen that proliferation of microorganisms was not observed in both cases, and thus safety against microorganisms could be secured.

In addition, sensory evaluation was performed on 30 employees of CJ CheilJedang Co., Ltd using the seasoning sauce prepared through the above processes, and, as a result, an average score in consideration of taste, flavor, texture, and appearance was seen as 4.05 (out of 5 points), which is significantly higher than an average score, i.e., 3.80 of a seasoning sauce prepared through an existing heat sterilization method.

### Example 3-2: Sterilization Effect and Sensory Evaluation of Seasoning Sauce according to Pre-treatment Sterilization Process and Ultra-high Pressure Heating Sterilization Process

A seasoning sauce was prepared using garlic and ginger having undergone the pre-treatment sterilization process according to Example 2-2, an ultra-high pressure of 500 MPa was applied to the prepared seasoning sauce at a temperature of 90°C to 100°C for 3 minutes, and then was stored in a refrigerated state and at room temperature. The results thereof are shown in Table 4 below, from which it was seen that proliferation of microorganisms was not observed in both cases, and thus safety against microorganisms could be secured.

In addition, sensory evaluation was performed on 30 employees of CJ CheilJedang Co., Ltd using the seasoning sauce prepared through the above processes, and, as a result, an average score in consideration of taste, flavor, texture, and appearance was seen as 3.95 (out of 5 points), which is significantly higher than an average score, i.e., 3.80 of a seasoning sauce prepared through an existing heat sterilization method. From the above results, it was confirmed that, when the sterilization method according to an embodiment of the present invention is used, utilization thereof is high in terms of future commercialization due to excellent taste, flavor, texture and appearance of a product.

**<Table 4>**

| Storage conditions | Sample groups | Salinity (%) | Brix (%) | pH | Whether or not microorganisms were proliferated |
|---|---|---|---|---|---|
| Refrigerated storage (15°C) | Non-treatment group | 1.55 | 32 | 4.93 | Fungi proliferated after 2 weeks of storage |
| | Ultra-high | 1.45 | 30 | 4.89 | Not observed until 11 |
| | pressure non-heating | | | | weeks of storage |
| | Ultra-high pressure heating | 1.43 | 29 | 4.87 | Not observed until 11 weeks of storage |
| Roomtemperature storage (35°C) | Non-treatment group | 1.45 | 36 | 4.95 | Microorganism proliferated after 1 day of storage |
| | Ultra-high pressure non-heating | 1.36 | 35 | 4.92 | Not observed until 12 days of storage |
| | Ultra-high pressure heating | 1.32 | 33 | 4.89 | Not observed until 12 days of storage |

The exemplary embodiments of the present invention have been described. It will be understood by those skilled in the art to which the present invention pertains that the present invention may be embodied in modified forms without departing from essential characteristics of the present invention. Thus, the disclosed embodiments should be considered in an illustrative sense only and not for the purpose of limitation. The scope of the present invention is defined by the following claims, not by the foregoing description, and all differences within a range equivalent thereto should be construed as being within the scope of the present invention.

## Claims

1. A method of sterilizing a seasoning sauce, the method comprising:
dipping a spicy vegetable in a solution including an antimicrobial agent;
blanching the spicy vegetable dipped in the solution including the antimicrobial agent;
preparing a seasoning sauce by mixing the blanched spicy vegetable with a seasoning ingredient and a thickener; and
packaging the seasoning sauce and sterilizing the resulting sauce at an ultra-high pressure.

2. The method of claim 1, wherein the spicy vegetable comprises at least one selected from the group consisting of garlic, ginger, chili pepper, black pepper, onions, and spring onions.

3. The method of claim 1, wherein the antimicrobial agent is selected from the group consisting of sodium hypochlorite, hypochlorous acid, chlorine dioxide, ozone, hydrogen peroxide, organic acids, bacteriocins, polylysine, and vitamin B1 lauryl sulfate.

4. The method of claim 1, wherein the solution including the antimicrobial agent comprises 0.01% (w/w) to 3% (w/w) of an antimicrobial agent.

5. The method of claim 1, wherein the blanching was performed by blanching the spicy vegetable dipped in the solution including the antimicrobial agent in water at a temperature of 80°C to 100°C.

6. The method of claim 1, wherein the seasoning ingredient comprises at least one selected from the group consisting of sugar, refined salt, soy sauce, hot pepper paste, soybean paste, vinegar, chili powder, kelp, shrimp, anchovies, and shiitake mushrooms.

7. The method of claim 1, wherein the sterilizing is performed by applying a pressure of 200 MPa to 900 MPa.

8. The method of claim 1, wherein the sterilizing is performed at a temperature of 20°C to 100°C.

9. The method of claim 1, wherein the packaging is performed by packaging the seasoning sauce in a packing material selected from the group consisting of a pouch, a plastic container, a glass bottle, a tube, and a can.
